# EUROPÄISCHE PATENTSCHRIFT

(11) **EP 0 433 659 B1**
(45) Veröffentlichungstag und Bekanntmachung des Hinweises auf die Patenterteilung: **22.02.1995**
(21) Anmeldenummer: 90121870.1
(22) Anmeldetag: 15.11.1990
(51) Int. Cl.: F16K 15/04, F16K 31/68

(54) **Thermostatventil**
Thermostatic valve
Soupape thermostatique

(30) Priorität: 22.12.1989 DE 8915063 U
(43) Veröffentlichungstag der Anmeldung: 26.06.1991
(73) Patentinhaber: BEHR-THOMSON DEHNSTOFFREGLER GMBH & CO., D-70806 Kornwestheim (DE)
(72) Erfinder: Saur, Roland, Dipl.-Ing. (FH), W-7000 Stuttgart 31 (DE); Jaiser, Gerhard, W-7141 Tamm (DE); Kunze, Jürgen, Dipl.-Ing. (FH), W-7255 Rutesheim (DE); Pflieger, Roland, W-7000 Stuttgart 31 (DE)
(74) Vertreter: Dauster, Hanjörg, Dipl.-Ing.

(56) Entgegenhaltungen:
- DE-B- 1 162 149
- DE-U- 1 633 757
- DE-U- 7 437 141
- DE-U- 8 102 817
- FR-A- 1 301 426
- GB-A- 1 441 837
- US-A- 4 100 935

## Beschreibung

Die Erfindung betrifft ein Thermostatventil mit einem von einem thermostatischen Arbeitselement verstellbaren Ventilteller, mit einem Ventilsitz und mit einem Belüftungsventil, das einen an dem Ventilsitz oder dem Ventilteller angebrachten Käfig mit einer Durchgangsöffnung enthält, der eine als Verschlußelement für die Durchgangsöffnung dienende Kugel aufnimmt.

Bei einem bekannten Thermostatventil der eingangs genannten Art (DE-U 81 02 817.2) ist als Käfig für die Kugel ein Drehteil vorgesehen, das eine im wesentlichen topfförmige Gestalt aufweist. Nach dem Einsetzen der Kugel in diesen Käfig wird der äußere Rand des topfförmigen Drehteils derart umgebördelt, daß die verbleibende Öffnung kleiner als der Kugeldurchmesser ist. Der Boden des Drehteils ist mit einem Ansatz versehen, der durch eine Öffnung des Ventilsitzes hindurchgesteckt und anschließend umgebördelt wird.

Es ist auch ein Rückschlagventil bekannt (DE-U-74 37 141.8), das zwischen zwei Flansche von Rohrleitungen eingebaut wird. Das Rückschlagventil besitzt einen scheibenförmigen Ringflansch mit einer zentralen Durchgangsöffnung, von welchem nach einer Seite stegförmige Kugelführungen lotrecht abragen, die in Abstand zu dem Rand des Ringflansches angeordnet sind. Diese Kugelführungen sind an ihrem Ende mit nach innen ragenden Ansätzen versehen, die auf der der montierten Kugel zugewandten Seite mit einer Anfasung und auf der Außenseite mit einer radialen Fläche versehen sind. Zum Einsetzen der Kugel werden diese Kugelführungen auseinandergebogen. Nach dem Einsetzen des Rückschlagventils umschließt eine der Rohrleitungen die Kugelführungen derart, daß ein Auseinanderbiegen nicht mehr möglich ist, so daß die Kugel gesichert ist.

Der Erfindung liegt die Aufgabe zugrunde, ein Thermostatventil der eingangs genannten Art zu schaffen, das eine einfache Herstellung einschließlich eines einfachen Einsetzens der Kugel ermöglicht, so daß die Herstellungskosten verringert sind.

Diese Aufgabe wird dadurch gelöst, daß der Käfig eine im wesentlichen zylindrische Gestalt mit einer etwa dem Doppelten des Durchmessers der Kugel entsprechenden axialen Länge aufweist und an einem Ende in einer Stirnwand mit der Durchgangsöffnung und an dem anderen Ende mit einer Einführöffnung für die Kugel versehen ist, wobei wenigstens zwei an der Einführöffnung beginnende und sich etwa über die Hälfte der axialen Länge des Käfigs erstreckende axiale Schlitze vorgesehen sind, die eine elastisch verformbare Zunge begrenzen, die mit einem nach innen in die Einführöffnung ragenden Ansatz versehen ist, der außen eine Anfasung und innen eine im wesentlichen quer zur Bewegungsrichtung der Kugel verlaufende Anschlagfläche aufweist.

Durch diese Ausbildung wird erreicht, daß der Käfig als solcher in einem Arbeitsgang hergestellt werden kann, wonach er mit der Kugel versehen wird, ohne daß anschließend noch einmal eine Bearbeitung des Käfigs durch Umbördeln o.dgl. notwendig ist. Dadurch läßt sich ein Arbeitsgang während der Herstellung einsparen, was in Anbetracht der sehr großen Stückzahlen, in denen derartige Thermostatventile hergestellt werden, eine beträchtliche Einsparung an Herstellungkosten bedeutet. Die Zunge mit dem in die Einführöffnung ragenden, außen angefasten Ansatz ermöglicht, daß die Kugel einfach eingeführt werden kann, wobei sich bei der Einführbewegung die Zunge selbsttätig abspreizt. Das Belüftungsventil soll in dem normalen Betrieb, d.h. bei geöffnetem Thermostatventil, geschlossen sein. Dabei wird die Kugel aufgrund der dynamischen Kräfte des strömenden Mediums in die Schließstellung gebracht. Aufgrund der axialen Länge des Käfigs und der axialen Länge der Schlitze wird sichergestellt, daß diese dynamischen Kräfte in ausreichender Weise auf die Kugel einwirken.

In weiterer Ausgestaltung der Erfindung wird vorgesehen, daß der Käfig im Bereich der Durchgangsöffnung mit einem in einer Aussparung des Ventilsitzes oder des Ventiltellers einsteckbaren Ansatz versehen ist, der mit einer mit dem Ventilsitz oder dem Ventilteller verrastbaren Rasteinrichtung versehen ist. Durch diese Ausbildung wird erreicht, daß auch das Anbringen des Käfigs an dem Ventilteller oder dem Ventilsitz keine nochmalige Bearbeitung des Käfigs, insbesondere eine Umbördelung o.dgl. erfordert. Dadurch läßt sich ein weiterer Arbeitsschritt bei dem Zusammenbau einsparen, was mit einer weiteren Kostenreduzierung verbunden ist.

In besonders vorteilhafter Ausgestaltung der Erfindung wird vorgesehen, daß der Käfig mit der oder den Zungen und/oder der Rasteinrichtung einstückig hergestellt ist. Dabei ist es besonders zweckmäßig, wenn der Käfig als Kunststoffspritzteil hergestellt ist. Die Herstellung eines derartigen Käfigs ist selbst sehr preiswert, wobei aus den bereits genannten Gründen eine nachträgliche Bearbeitung an dem Käfig eingespart wird.

Weitere Merkmale und Vorteile der Erfindung ergeben sich aus der nachfolgenden Beschreibung der in der Zeichnung dargestellten Ausführungsform.
- Fig. 1: zeigt einen Axialschnitt durch ein erfindungsgemäßes Thermostatventil mit einem Belüftungsventil,
- Fig. 2: einen Axialschnitt durch das Belüftungsventil in größerem Maßstab,
- Fig. 3: eine Ansicht in Richtung des Pfeiles III der Fig. 2. und
- Fig. 4: einen Axialschnitt durch eine weitere Ausführungsform eines Belüftungsventils, das aus zwei Teilen zusammengesetzt ist.

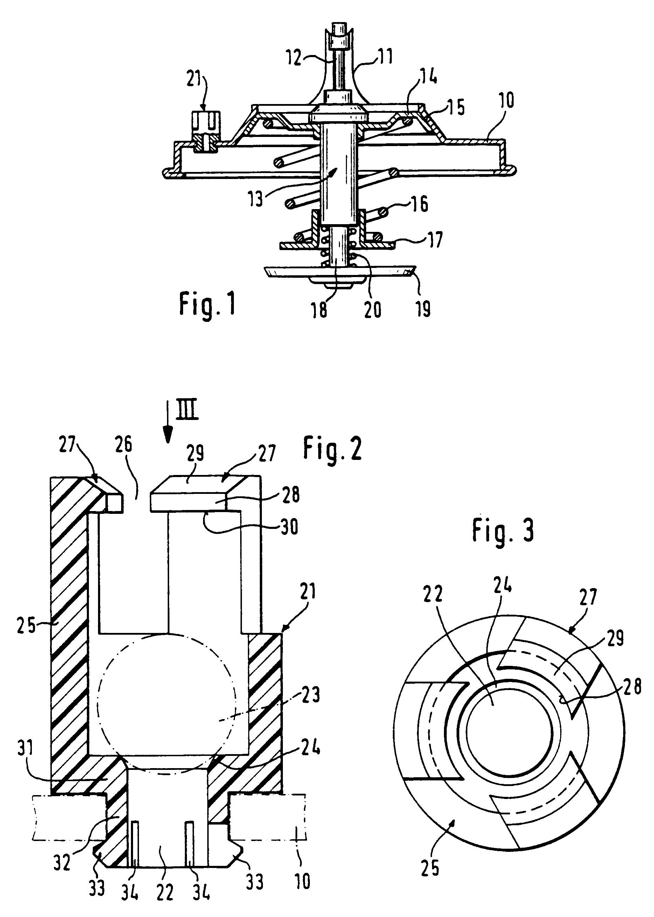

Das in Fig. 1 dargestellte Thermostatventil ist insbesondere für einen Einsatz in einem Kühlmittelkreislauf eines Kraftfahrzeugverbrennungsmotors bestimmt. Es besitzt einen Befestigungsring (10), mit dem es an einem Gehäuse o.dgl. befestigt wird. An diesem Ring (10) ist ein Bügel (11) angebracht, an dem der Kolben (12) eines thermostatischen Arbeitselementes (13) gehalten ist. An dem Gehäuse des thermostatischen Arbeitselementes (13) ist ein Ventilteller (14) befestigt, dem ein von dem Befestigungsring (10) gebildeter Ventilsitz (15) zugeordnet ist. Der Ventilteller (14) und damit das Gehäuse des thermostatischen Arbeitselementes (13) sind mit einer Schließfeder (16) belastet, die sich an dem Ventilteller (14) und einem Widerlager (17) abstützt. Das Widerlager (17) ist ein Bügel, der an dem Befestigungsring (10) angebracht ist. An dem Gehäuse des thermostatischen Arbeitselementes (13) ist in axialer Verlängerung ein Bolzen (18) angebracht, auf welchem ein Kurzschlußventilteller (19) in bekannter Weise gleitend geführt ist, der mit einer Feder (20) belastet ist.

An dem als Ventilsitz (15) ausgebildeten Befestigungsring (10) ist ein Belüftungsventil (21) angebracht, das entgegen der normalen Strömungsrichtung eine Bypaßöffnung zu dem Thermostatventil bildet. Das in Fig. 2 und 3 in größerem Maßstab in seinen Einzelheiten dargestellte Belüftungsventil (21) weist eine Durchgangsöffnung (22) auf, die durch den als Ventilsitz (15) ausgebildeten Befestigungsring (10) hindurchgeführt ist. Der Durchgangsöffnung (22) ist als Verschlußelement ein als Kugel (23) ausgebildeter Ventilkörper zugeordnet, der sich aufgrund der dynamischen Strömungskräfte bei der Normalströmung an eine Anfasung (24) der Durchgangsöffnung (22) anlegt und diese verschließt. Diese Kugel (23) ist in einem Käfig (25) derart frei beweglich geführt, daß sie sich bei Druckunterschieden entgegen der normalen Strömungsrichtung von der Durchgangsöffnung (22) abheben kann. Der Käfig (25) ist einteilig als ein Kunststoffspritzteil hergestellt, vorzugsweise aus Polyamid. Er besitzt eine im wesentlichen zylindrische Gestalt, die sich in Verlängerung der Durchgangsöffnung (22) erstreckt.Die der Durchgangsöffnung (22) gegenüberliegende Seite ist als eine Einführöffnung (26) für die Kugel (23) ausgebildet. Diese Einführöffnung (26) wird von drei gleichmäßig in Umfangsrichtung verteilt angeordneten Zungen (27) begrenzt, die jeweils mit einem nach innen ragenden Ansatz (28) versehen sind. Die Ansätze (28) lassen einen Querschnitt frei, der kleiner als der Durchmesser der Kugel (23) ist. Die Ansätze (28) sind auf der der Durchgangsöffnung (22) abgewandten Außenseite jeweils mit einer Anfasung (29) versehen, die einen Winkel von etwa 60° zur Axialrichtung aufweist. Dadurch wird erreicht, daß bei einem Einführen der Kugel (23) mit einer Belastung in axialer Richtung ein Aufspreizen der Zungen (27) erfolgt, so daß die Kugel (23) passieren kann. An der der Durchgangsöffnung (22) zugewandten Seite sind die Ansätze (28) mit Anschlagflächen (30) versehen, die im wesentlichen quer zur Axialrichtung und damit quer zur Bewegungsrichtung der Kugel (23) verlaufen.

Der Innendurchmesser des Käfigs (25) ist etwa um ein Drittel größer als der Durchmesser der Kugel (23). Die axiale Länge des Käfigs (25) entspricht etwa dem Doppelten des Kugeldurchmessers. Die zwischen den Zungen (27) belassenen Schlitze haben etwa die Breite der Zungen und erstrecken sich in axialer Richtung etwa über die Hälfte der Länge des Käfigs. Dadurch wird einerseits sichergestellt, daß ein ausreichender Strömungsquerschnitt vorhanden ist, während andererseits in ausreichender Weise eine elastische Verformung der Zungen (27) ermöglicht ist.

Bei einer abgewandelten Ausführungsform wird vorgesehen, daß die Schlitze zwischen den Zungen (27) sich bis in den Bereich der Anfasung (24) der Durchgangsöffnung (22) erstrecken. Dadurch ist es dann möglich, die axiale Länge des Käfigs zu verringern und dennoch eine ausreichende Elastizität für die Zungen (27) vorzusehen. In diesem Fall kann es jedoch zweckmäßig sein, die Breite der Schlitze zwischen den Zungen (27) zu verringern, um ausreichend große dynamische Kräfte zu erhalten, um die Kugel (23) in die Verschlußstellung zu bringen.

Der der Einführöffnung (26) gegenüberliegende Boden (31) des Käfigs ist mit einem im wesentlichen zylindrischen Ansatz (32) versehen, der die Durchgangsöffnung (22) enthält. Dieser zylindrische Ansatz (32) ist durch den aus Blech hergestellten Befestigungsring (10) hindurchgesteckt,der mit einer entsprechenden Aussparung versehen ist.Der Ansatz (32) ist außen mit Rastnasen (33) versehen, die die dem Boden (31) des Käfigs (25) abgewandten Ränder der Durchbrechung des Befestigungsrings (10) hintergreifen. Der Ansatz (32) ist in diesem Bereich mit Längsschlitzen (34) versehen, so daß in radialer Richtung eine ausreichende Elastizität besteht, um ein Zusammendrücken während des Einsteckens zu ermöglichen. Die Rastnasen (33) sind auf der dem Rand der Aussparung des Befestigungsrings (10) zugewandten Seite zweckmäßigerweise mit einer Schrägen versehen, so daß der Boden (31) des Käfigs (25) mit einer elastischen Kraft an den Befestigungsring (10) herangezogen wird.

Bei einer abgewandelten Ausführungsform wird vorgesehen, daß der Ansatz (32) mit einem Außengewinde versehen ist, dessen Gewinderillen eine Breite aufweisen, die der Starke des Materials des Befestigungsringes (10) entspricht. Dadurch ist es ebenfalls in einfacher Weise möglich, den Käfig (25) als fertiges Bauelement herzustellen und ohne nachträgliche Bearbeitung an dem Befestigungsring (10) sicher anzubringen. Dabei kann vorgesehen werden, daß der letzte Gewindegang, der sich an dem Boden (31) anschließt, als eine Ringnut ausgebildet ist.

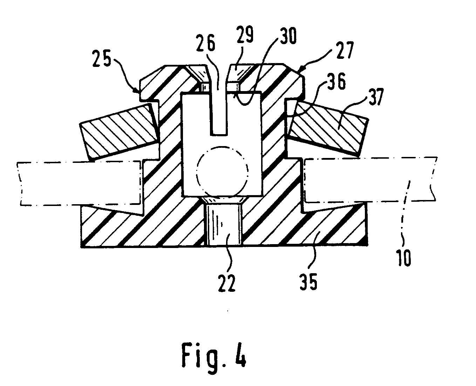

Bei der Ausführungsform nach Fig. 4 ist der als Kunststoffspritzteil hergestellte Käfig mit einem im Bereich der Durchgangsöffnung (22) nach außen abragenden Flansch (35) versehen. Der Käfig (25) wird durch eine Aussparung des Ventiltellers oder des Ventilsitzes hindurchgesteckt - bei dem Ausführungsbeispiel nach Fig. 1 durch eine Aussparung des Befestigungsringes (10) -, bis sein Flansch (35) an dem Rand dieser Aussparung anliegt. In einem Abstand, der der Materialstärke des Befestigungsrings (10) in etwa entspricht, ist der Käfig (25) außen mit einer Ringnut (36) versehen. In diese Ringnut (36) wird ein Ring (37) eingerastet, der als Gegenflansch zu dem Flansch (35) dient, so daß die Wandung mit der Aussparung zwischen den Flansch (35) und den Ring (37) eingespannt wird. Wie in Fig. 4 dargestellt ist, hat der Ring (37) in etwa die Gestalt einer Tellerfeder.Die dem einzuspannenden Rand zugewandte Fläche des Flansches (35) steigt von innen nach außen an, so daß zunächst nur der äußere Rand des Flansches (35) an dem Randbereich der Aussparung anliegt. Durch elastische Deformation des Ringes (37) und/oder des Flansches (35) wird somit erreicht, daß der Käfig (25) mit einer Vorspannung gehalten ist. Der Ring (37) kann aus Kunststoff oder Metall hergestellt sein. Bei einer gegenüber Fig. 4 abgewandelten Ausführungsform wird vorgesehen, daß der Ring (37) in radialer Richtung federelastisch ist, so daß er unter einem Aufweiten von der Seite der Einführöffnung (26) her aufgeschoben und in die Ringnut (36) eingerastet werden kann. Um eine derartige Elastizität zu erhalten, wird dann der Ring (37) als ein Federring ausgebildet, der vorzugsweise mit einem Schlitz versehen ist.

Bei einer weiteren Abwandlung wird vorgesehen, daß der Ring (37) als radial nachgiebiges Federelement ausgebildet ist und gleichzeitig Bestandteil einer Kappe ist, die die Einführöffnung (26) übergreift. Diese Kappe hat dann im Bereich der Einführöffnung (26) eine Aussparung, die kleiner als der Durchmesser des Ventilkörpers (23) ist. In diesem Fall kann dann darauf verzichtet werden, daß die Einführöffnung (26) mit einer oder mehreren Federzungen (27) eingefaßt ist. In diesem Fall übernimmt die mit dem Ring (37) in der Ringnut (36) verrastete Kappe die Sicherung des Ventilkörpers (23) gegen ein Herausfallen. Der gleiche Zweck wird bei einer weiteren Ausführungsform dadurch erreicht, daß der Ring (37) mit einem die Einführöffnung (26) übergreifenden Bügel versehen ist. Auch in diesem Fall kann auf elastisch verformbare Zungen (27) verzichtet werden, d.h. der Käfig kann innen eine glatte zylindrische Form aufweisen.

## Patentansprüche

1. Thermostatventil mit einem von einem thermostatischen Arbeitselement (13) verstellbaren Ventilteller (14), mit einem Ventilsitz (15) und mit einem Belüftungsventil (21), das einen an dem Ventilsitz oder dem Ventilteller angebrachten Käfig (25) mit einer Durchgangsöffnung (22) enthält, der eine als Verschlußelement für die Durchgangsöffnung dienende Kugel (23) aufnimmt, dadurch gekennzeichnet, daß der Käfig (25) eine im wesentlichen zylindrische Gestalt mit einer etwa dem Doppelten des Durchmessers der Kugel (23) entsprechenden axialen Länge aufweist und an einem Ende in einer Stirnwand (31) mit der Durchgangsöffnung (22) und an dem anderen Ende mit einer Einführöffnung (26) für die Kugel versehen ist, wobei wenigstens zwei an der Einführöffnung beginnende und sich etwa über die Hälfte der axialen Länge des Käfigs erstreckende axiale Schlitze vorgesehen sind, die eine elastisch verformbare Zunge (27) begrenzen, die mit einem nach innen in die Einführöffnung ragenden Ansatz (28) versehen ist, der außen eine Anfasung (29) und innen eine im wesentlichen quer zur Bewegungsrichtung der Kugel (23) verlaufende Anschlagfläche (30) aufweist.

2. Thermostatventil nach Anspruch 1, dadurch gekennzeichnet, daß der Käfig (25) im Bereich der Durchgangsöffnung (22) mit einem in einer Aussparung des Ventilssitzes (10, 15) oder des Ventiltellers (14) einsteckbaren Ansatz (32) versehen ist, der mit einer mit dem Ventilsitz oder dem Ventilteller verrastbaren Rasteinrichtung (33, 34) versehen ist.

3. Thermostatventil nach Anspruch 1 oder 2, dadurch gekennzeichnet, daß der Käfig (25) mit der oder den Zungen (27) und/oder der Rasteinrichtung (33, 34) einstückig hergestellt ist.

4. Thermostatventil nach einem der Ansprüche 1 bis 3, dadurch gekennzeichnet, daß der Käfig (25) des Belüftungsventils (21) mit einem an den Rand einer Aussparung des Ventilsitzes (10, 15) oder des Ventiltellers (14) anlegbaren, nach außen abragenden Flansch (35) und in einem Abstand dazu auf der Außenseite mit einer Rastnut (36) zur Aufnahme eines einrastbaren, als Gegenflansch dienenden Ringes (37) versehen ist.

5. Thermostatventil nach Anspruch 4, dadurch gekennzeichnet, daß der Ring (37) als eine in radialer Richtung nachgiebige Feder gestaltet ist.

6. Thermostatventil nach Anspruch 4 oder 5, dadurch gekennzeichnet, daß der Ring (37) Bestandteil einer die Einführöffnung (26) übergreifenden Kappe ist.

7. Thermostatventil nach einem der Ansprüche 4 oder 5, dadurch gekennzeichnet, daß der Ring (37) mit wenigstens einem die Einführöffnung (26) übergreifenden Bügel versehen ist.

8. Thermostatventil nach Anspruch 3 oder 4, dadurch gekennzeichnet, daß der Käfig (25) als Kunststoffspritzteil hergestellt ist.

## Claims

1. Thermostatic valve having a valve disk (14), that can be adjusted via a thermostatic actuator element (13), a valve (15) and a venting valve (21) comprising a cage (25) with a passage opening (22), which cage is provided on the valve seat of the valve disk and accommodates a ball (23) serving as closure elements for the passage opening, characterized in that the cage (25) exhibits a substantially cyindrical shape having an axial length equal to approximately twice the diameter of the ball (23), and is provided on its one end with a passage opening (22) in one end wall (31) and with an insertion opening (26) for the ball on its other end, there being provided with at least two axial slots that begin at the insertion opening and extend over approximately half of the axial length of the cage and that delimit an elastically deformable tongue (27) which is provided with a projection (28) projecting inwardly into the insertion opening and being chamfered (29) on its outside and provided on its inside with a stop surface (30) extending substantially in transverse direction to the sense of movement of the ball (23).

2. Thermostatic valve according to claim 1, characterized in that the cage (25) is provided, in the area of the passage opening (22), with a projection (32) that can be mounted in a recess in the valve seat (10,15) or in the valve disk (14) and that is provided with latching means (33, 34) for being latched with the valve seat or the valve disk.

3. Thermostatic valve according to claim 1 or 2, characterized in that the cage (25) is formed as one piece with the tongue or tongues (27) and/or the latching means (33, 34).

4. Thermostatic valve according to any of claims 1 to 3, characterized in that the cage (25) of the venting valve (21) is provided with a flange (35), which projects to the outside and can be applied against the edge of a recess in the valve seat (10, 15) or in the valve disk (14), and further at a certain spacing therefrom, on the outside, with a latching groove (36) intended to receive a latching ring (37) serving as a counterflange.

5. Thermostatic valve according to claim 4, characterized in that the ring (37) is configured as a radially resilient ring.

6. Thermostatic valve according to claim 4 or 5, characterized in that the ring (37) is part of a cap that spans the insertion opening (26).

7. Thermostatic valve according to claim 4 or 5, characterized in that the ring (37) is provided with at least one strap spanning the insertion opening (26).

8. Thermostatic valve according to claim 3 or 4, characterized in that the cage (25) is an injection-moulded plastic part.

## Revendications

1. Soupape thermostatique avec une tête de soupape (14) déplaçable au moyen d'un élément de travail (13), avec un siège de soupape (15) et avec une soupape de ventilation (21) comprenant une cage (25), fixée sur le siège ou la tête de soupape, avec une ouverture de passage (22), la cage étant munie d'une bille (23) servant d'élément de fermeture pour l'ouverture de passage, caractérisée en ce que la cage (25) présente une forme essentiellement cylindrique d'une longueur axiale correspondant environ au double du diamètre de la bille (23) et qu'elle est munie à une extrémité dans une paroi d'about (31) de l'ouverture de passage (22) et à l'autre extrémité d'une ouverture d'introduction (26) pour la bille, au moins deux fentes axiales partant de l'ouverture d'introduction et s'étendant sur environ la moitié de la longueur axiale de la cage étant prévues, ces fentes bornant une languette (27) flexible munie d'un rebord (28) faisant saillie dans l'ouverture d'introduction et présentant à l'extérieur un chanfrein (29) et à l'intérieur une surface d'arrêt (30) s'étendant essentiellement transversalement au sens de déplacement de la bille (23).

2. Soupape thermostatique selon la revendication 1, caractérisée en ce que la cage (25) est munie dans la zone de l'ouverture de passage (22) d'un embout (32) embrochable dans un évidement du siège de soupape (10, 15) ou de la tête de soupape (14), cet embout étant équipé d'un dispositif d'arrêt (33, 34) enclenchable dans le siège ou la tête de soupape.

3. Soupape thermostatique selon la revendication 1 ou 2, caractérisée en ce que la cage (25) est réalisé d'une pièce avec la ou les languette(s) (27) et/ou avec le dispositif d'arrêt (33, 34).

4. Soupape thermostatique selon l'une des revendications 1 à 3, caractérisée en ce que la cage (25) de la soupape de ventilation (21) est munie d'une bride (35) faisant saillie vers l'extérieur et pouvant être mise en contact avec le bord d'un évidement du siège de soupape (10, 15) ou de la tête de soupape (14) et sur la face extérieure à un certain écart d'une rainure d'arrêt (36) pour la réception d'une bague (37) enclenchable servant de contre-bride.

5. Soupape thermostatique selon la revendication 4, caractérisée en ce que la bague (37) est réalisée comme ressort flexible dans le sens radial.

6. Soupape thermostatique selon la revendication 4 ou 5, caractérisée en ce que la bague (37) est une partie constituante d'une calotte recouvrant l'ouverture d'introduction (26).

7. Soupape thermostatique selon l'une des revendications 4 ou 5, caractérisée en ce que la bague (37) est équipée d'au moins un étrier passant par-dessus l'ouverture d'introduction (26).

8. Soupape thermostatique selon la revendication 3 ou 4, caractérisée en ce que la cage (25) est réalisée comme pièce moulée par injection.
